# EUROPEAN PATENT SPECIFICATION

(11) **EP 3 562 898 B1**
(45) Date of publication and mention of the grant of the patent: **07.06.2023**
(21) Application number: 17888866.5
(22) Date of filing: 27.12.2017
(51) Int. Cl.: C08F 299/06, C09D 175/16, C08F 222/10, C09D 4/00, C08J 7/043, C08J 7/046, C08J 7/04

(54) **UV CURABLE COATING COMPOSITION, METHOD OF APPLYING THE SAME AND SUBSTRATE COATED THEREWITH**
UV-HÄRTBARE BESCHICHTUNGSZUSAMMENSETZUNG, VERFAHREN ZUM AUFTRAGEN DAVON UND DAMIT BESCHICHTETES SUBSTRAT
COMPOSITION DE REVÊTEMENT DURCISSABLE AUX UV, SON PROCÉDÉ D'APPLICATION ET SUBSTRAT REVÊTU DE CELLE-CI

(30) Priority: 30.12.2016 CN 201611256122
(43) Date of publication of application: 06.11.2019
(73) Proprietor: PPG Coatings (Tianjin) Co., Ltd., Tianjin 300457 (CN)
(72) Inventor: SONG, Yuanjie, Nantong Jiangsu 226361 (CN); LUO, Zhengsong, Jiangsu 215000 (CN); LIU, Haifeng, Jiangsu 215129 (CN)
(74) Representative: f & e patent
(86) International application number: PCT/CN2017/119030
(87) International publication number: WO 2018/121613

(56) References cited:
- CN-A- 103 554 540
- CN-A- 104 004 452
- CN-A- 104 379 621
- CN-A- 106 029 378
- CN-A- 106 094 433
- CN-A- 106 634 552
- JP-A- 2011 144 309
- JP-A- 2012 140 516
- JP-A- 2015 161 899
- US-A1- 2005 136 252
- US-A1- 2016 215 161
- US-B1- 8 754 145

## Description

### Field of Invention

The present invention relates to an UV curable coating composition having fingerprint resistance, high anti-steel and high hardness, and in particular to an UV curable coating composition comprising a high-functionality UV curable polyurethane acrylate. The present invention further relates to a method of coating a substrate with the UV curable coating composition and the substrate coated therewith.

### Background of the invention

UV curable coatings have advantages in physical and chemical properties and decorative performance as compared to traditional coatings and thus have been widely applied onto polymethacrylates (PMMA)/polycarbonates (PC)/Polyethylene terephthalate (PET) substrates in order to impart such substrates properties including fingerprint resistance, high anti-steel and high hardness. Current UV curable coating compositions exhibit poor anti-steel property, mainly reflected by significant difference in contact angle before and after steel wool testing. Therefore, there is a need for an UV curable coating composition having improved fingerpreint resistance, high anti-steel and high hardness. JP2011144309A discloses an active-energy-ray hardening-type coating composition containing a polyurethane polyacrylate compound (I) having functionality of 8-24, an urethane acrylate compound having a functionality of 6 and obtained by reacting isophorone diisocyanate and pentaerythritol triacrylate, pentaerythritol tetraacrylate, a poly(acryloyloxyalkyl)isocyanurate and radically polymerizable inorganic fine particles.

### Summary of the invention

The present invention provides an UV curable coating composition, comprising an UV curable polyurethane acrylate having functionality greater or equal to 6 and 0.1-3 wt.% of a fluorine-containing acrylic soil-repellent, based on the weight of the coating composition, wherein the UV curable polyurethane acrylate comprises 5-50 wt.% of six-functionality aliphatic polyurethane acrylate and 5-50 wt.% of ten-functionality aliphatic polyurethane acrylate, based on the weight of the coating composition.

The present invention further provides a method of forming a coating on a substrate, comprising applying an UV curable coating composition to at least a portion of the substrate, wherein the UV curable coating composition comprises an UV curable polyurethane acrylate having functionality greater or equal to 6 and 0.1-3 wt.% of a fluorine-containing acrylic soil-repellent, based on the weight of the coating composition, wherein the UV curable polyurethane acrylate comprises 5-50 wt.% of six-functionality aliphatic polyurethane acrylate and 5-50 wt.% of ten-functionality aliphatic polyurethane acrylate, based on the weight of the coating composition.

The present invention further provides a coated substrate, comprising a substrate and an UV curable coating composition deposited on at least a portion of the substrate, wherein the UV curable coating composition comprises an UV curable polyurethane acrylate having functionality greater or equal to 6 and 0.1-3 wt.% of a fluorine-containing acrylic soil-repellent, based on the weight of the coating composition, wherein the UV curable polyurethane acrylate comprises 5-50 wt.% of six-functionality aliphatic polyurethane acrylate and 5-50 wt.% of ten-functionality aliphatic polyurethane acrylate, based on the weight of the coating composition.

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims, are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances. Further, in this application, the use of "a" or "an" means "at least one" unless specifically stated otherwise. For example, "a" film forming resin, "a" crosslinked organic particle, "an" inorganic pigment particle, and the like refer to one or more of any of these items.

As used in the description and appended claim, the articles "a", "an", and "the" include plural references, unless specifically stated as one reference.

The present invention is directed to provide a coating composition having fingerprint resistance, high anti-steel and high hardness, which is UV curable. UV curing has advantages such as short curing time, simple equipment, high energy utilization and no harm to environment, and therefore it is widely used for rapid curing of coatings, prints, crosslinking agents, and structural materials. UV curing is especially suitable for the surface coating of electronic consumer products.

The UV curing coating composition comprises a high-functionality UV curable polyurethane acrylate. Polyurethane acrylate is typically prepared by reacting polyisocyanate, polyol, and acrylic hydroxyl ester. As polyurethane acrylate contains urethane and acrylate functional groups, the coat formed upon curing will possess high scratch resistance, flexibility, high tear strength and low temperature property contributed by polyurethane and excellent optic properties and weather resistance contributed by polyacrylate. Polyurethane acrylate that can be used in the present invention may be an aliphatic polyurethane acrylate oligomer and an aromatic polyurethane acrylate oligimer. The aliphatic polyurethane acrylate oligomer is preferred because it has superior flexibility and light stability, and is not prone to yellowing.

The aliphatic polyurethane acrylate that can be used in the present invention preferably has a number average molecular weight (Mn) of 800-4000. The number average molecular weight (Mn) is determined by gel permeation chromatography using an appropriate standard such as a polystyrene standard.

Further, the aliphatic polyurethane acrylate that is used in the present invention has functionality greater than or equal to 6 and comprises 5-50 wt.% of six-functionality aliphatic polyurethane acrylate and 5-50 wt.% of ten-functionality aliphatic polyurethane acrylate, based on the weight of the coating composition. The coat formed by using such high-functionality polyurethane acrylate behaves well in hardness, steel wool, physical properties, exhibiting advantages including high abrasion resistance and little change in contact angle after steel wool testing.

The UV curable polyurethane acrylate according to the present invention comprises 5-50 wt% of six-functionality aliphatic polyurethane acrylate and 5-50 wt% of ten-functionality aliphatic polyurethane acrylate, based on the weight of the coating composition.

The six-functionality aliphatic polyurethane acrylate may be a reaction product of isophorone diisocyanate and pentaerythritol triacrylate. The ten-functionality aliphatic polyurethane acrylate may be polymerized by isophorone diisocyanate monomers.

Many commercially aliphatic polyurethane acrylate can be used in the present invention. For example, examples of such aliphatic polyurethane acrylate that can be used in the present invention include, but are not limited to, W4560 from Wuxing, U-0672-100 from Lida, 2421 from DSM, 6195-100 from Changxing, RA4800M from Mitsui, U-0930 from Lihua, and the like.

The UV curable coating composition according to the present invention further comprises 1-3 wt% of a photoinitiator based on the weight of the coating composition. There is no particular limitation to the photoinitiator used, as long as it can decompose to generate free radicals upon exposure to light radiation and initiate a photopolymerization reaction. Available photoinitiators include, but are not limited to benzoin derivative, benzil ketal derivateice, dialkoxy acetophenone, α-hydroxyalkylphenylketone, α-aminealkylphenylketone, acyl phosphine hydride, esterified oxime ketone compounds, aryl peroxide ester compounds, halo methyl aryl ketone, organic sulphur-containing compounds, benzoylformate, and the like. Two or more photoinitiators may be selected as needed.

Many commercially available photoinitiators can be used in the present invention. For example, examples of such photoinitiators that can be used in the present invention include, but are not limited to, DBC184/TPO/BP/200 from Taiwan DBC, 184/TPO/BP/NMF from Ciba, and any combination thereof.

The UV curable coating composition according to the present invention further comprises an organic solvent. There is no specific limitation to the solvent used, which can be any of organic solvents known by those skilled in the art and which includes, without limitation, an aliphatic or aromatic hydrocarbon such as Solvesso 100^{™}, toluene or xylene, an alcohol such as butanol or isopropanol, an ester such as ethyl acetate, butyl acetate or iso-butyl acetate, a ketone such as acetone, methyl isobutyl ketone or methyl ethyl ketone, an ether, an ether-alcohol or an ether ester such as ethyl 3-ethoxypropionate, or a mixture of any of the aforesaid. Preferably it is ethyl acetate and/or iso-butyl acetate and/or methyl ethyl ketone. The solvent is usually in an amount of 10-50 wt% of the second coating composition.

The UV curable coating composition according to the present invention further comprises one or more other additives, which include, but are not limited to an stain repellent, a dispersant, a leveling agent, an antioxidant, a deforming agent, a rheological agent, and the like. The types of these additives are well-known by those skilled in the art and the amount thereof will be easily determined by those skilled in the art as needed.

The UV curable coating composition comprises 0.1-3 wt% of a fluorine-containing acrylic soil-repellent, based on the weight of the coating composition, which is used with the high-function UV curable polyurethane acrylate to enhance the fingerprint resistance and abrasion resistance of the resulting coat. Examples of such soil-repellent include but are not limited to KY-1203 from ShinEtsu.

The UV curable coating composition according to the present invention is applied onto at least a portion of the substrate by known techniques in the art, which for example comprise spraying, rolling, curtain coating, dipping/immersion, brushing, or flow coating. Then, the resulting coating film is subjected to a UV curing, which may for example be achieved by baking at 60-80°C for 5-10 min to evaporate the solvent, followed by UV irradiating at UV energy of 400-1600 mJ/cm² and light intensity of 80-300 mW/cm². The film thickness of the coating is usually in the range of 5 to 10 µm.

The UV curable coating composition according to the present invention may be applied to any substrate. Said substrate may include, but are not limited to ceramics, woods, leathers, stones, glass, alloy, paper, plastics, fiber, cotton textiles, and the like, preferably plastic substrates. The plastic substrates particularly refer to an electronic display of an electronic product, such as a display on board, a PET protective film of a mobile phone and a display of a computer. The plastic substrate may be prepared from polymethacrylates (PMMA), polycarbonates (PC), and polyethylene terephthalate (PET).

### Examples

The following examples are provided to illustrate the invention, which, however, are not to be considered as limiting the invention to their details. Unless otherwise indicated, all parts and percentages in the following examples, as well as throughout the specification, are by weight.

### Preparation Examples

The UV curable coating composition according to the present invention was prepared by mixing the components and amounts thereof listed in Table 1.

**Tablet. Formulation of UV curable coating composition**

| | Example 1 (wt%) | Example 2 (wt%) | Example 3 (wt%) |
|---|---|---|---|
| polyurethane acrylate oligomer¹ | 10 | 30 | 50 |
| polyurethane acrylate oligomer² | 50 | 30 | 10 |
| Solvent³ | 37 | 37 | 37 |
| Photoinitiator⁴ | 2.5 | 2.5 | 2.5 |
| Stain repellent⁵ | 0.5 | 0.5 | 0.5 |
| Total | 100 | 100 | 100 |

| | | | |
|---|---|---|---|
| ¹ Six-functionality aliphatic polyurethane acrylate, W4560 from Wuxing ² Ten-functionality aliphatic polyurethane acrylate, U-0672-100 from Lida ³ Solvent: a mixture of butyl acetate and isobutyl acetate ⁴ Irgacure 184, Taiwan DBC ⁵ KY1203, Xinyue | | | |

### Preparation process of coats

The coating compositions were diluted with a diluent formulated by mixing ethyl acetate, isopropanol, and ethylene glycol monobutyl ether in an appropriate ratio, such that the coating compositions after dilution have a viscosity of 7.5-8.5s where the viscosity was measure through an IWATA 2# CUP. Then, the diluted coating compositions were coated onto the PMMA/PC/PET substrate via any of spraying, curtain coating, rolling, dipping/immersion coating followed by baking at 60-80°C for 5-10 min to remove the solvent. The photoinitiator decomposed to generate active free radicals via exposure to UV light radiation (UV energy: 400-1600 mJ/cm², light intensity: 80-300mw/cm²) and initiated a polymerization between the monomer and the resin, forming a film of three-dimensional crosslinked network to obtain the basecoat.

Then, the substrates coated with the UV curable coating composition of the present invention were tested for the following properties. Results were shown in Table 2.

### Testing items

### 1. Pencil hardness

Requirement on pencil: Mitsubishi 4H pencil and 1000# sandpaper were chosen. Pencil point is at an angle of 90° with the plane of the sandpaper, and then it was worn into a cylindrical shape.

Testing method. The pencil was mounted on a pencil hardness tester, calibrated, adjusted into balance, and loaded with a weight of 1 kg. Three lines having a 5-10 mm length were cut at an angle of 45±1 in different positions of the fingerprint sensing surface of the sensor. Then, pencil scratches were erased with an eraser.

Note: rotating the pencil 90 degrees after scratching once to avoid the abrasion area of the pencil point, otherwise, testing results were invalid.

### 2. Scratch resistance

BONSTAR 0000# steel wool was used with a load of 1000g and a steel wool area of 20mm*20mm. Testing is conducted at a rate of 60 cycles/min with a friction distance of 35-40mm. 2000 continuous frictions were done on the film-coated surface of the covering plate of the sample. It is required the contact angle after steel wool testing is greater than 90.

### 3. Adhesion of cured film

The sample surface was cut by 6x6 lines with a NT knife (1 mm² gird (lattice), total number of 25; the marking penetrating all the way to the substrate) and the testing surface remained as even as possible (keeping the blade sharp). If the sample was too small to have enough cross-cutting space, a 45° cross-cut grid would be taken. Nichiban tape (No. 405), Scotch tape (No. 610), or other tapes of the same type (18 mm broad, tape viscosity should be greater than or equal to 5.3 N/18mm broadth) was applied over the sample surface and compacted with a rubber to allow the tape sufficiently in contact with the sample surface. The sample standed for 3 min. Tape was removed by pulling it off rapidly back over itself in an angle of 90°. The testing surface was visually examined and assessed with reference to ISO standard.
ISO standard rating
0 scale: 5B
Edges of incisions are completely smooth, and no peeling occurs at the edges of lattices.
1 scale: 4B
There is a small piece of peeling at the intersections of incisions, and actual failure is less than or equal to 5%.
2 scale: 3B
There is peeling at the edges or intersections of incisions, with a peeling area from 5% to 15%.
3 scale: 2B
There is partial peeling or a large piece of peeling along the edges of incisions, or part of lattices are wholly peeled off, with a peeling area in a range of 15%-35%.
4 scale: 1B
There is much peeling at the edges of incisions, or part or all of some lattices are peeled off, with a peeling area in a range of 35%-65%.
5 scale: 0B
The painting peels off significantly at the edges or intersections of incisions, with a peeling area greater than 65%.
The testing result is required at or above 4B.

### 4. Water contact angle

A commercial contact angle tester was used. An initial contact angle greater than 105 is required.

### 5. Transmittance testing

Testing procedure was carried out in accordance with WI-SOP-164 <optical transmittance measuring instruments Transmittance greater than 90° is required for a transparent material.

**Table 2. Performance Testing Results**

| | Example 1 | Example 2 | Example 3 |
|---|---|---|---|
| transparent | 4H | 4H | 4H |
| Scratch resistance | 93.1 | 95.1 | 95.8 |
| Adhesion of cured film | 4B | 4B | 4B |
| Water contact angle | 108.9 | 109.8 | 109.9 |
| Transmittance testing | 91.3 | 91.3 | 91.4 |

## Claims

1. An UV curable coating composition, comprising an UV curable polyurethane acrylate having functionality greater or equal to 6 and 0.1-3 wt% of a fluorine-containing acrylic soil-repellent, based on the weight of the coating composition, wherein the UV curable polyurethane acrylate comprises 5-50 wt% of six-functionality aliphatic polyurethane acrylate and 5-50 wt% of ten-functionality aliphatic polyurethane acrylate, based on the weight of the coating composition.

2. The UV curable coating composition according to claim 1, wherein the UV curable polyurethane acrylate has a number average molecular weight from 800 to 4000, wherein the number average molecular weight is determined according to the method mentioned in the specification.

3. The UV curable coating composition according to claim 1 or 2, wherein the UV curable polyurethane acrylate is selected from the group consisting of six-functionality aliphatic polyurethane acrylate, ten-functionality aliphatic polyurethane acrylate, and a mixture thereof.

4. The UV curable coating composition according to any one of preceding claims, wherein the six-functionality aliphatic polyurethane acrylate is a reaction product of isophorone diisocyanate and pentaerythritol triacrylate.

5. The UV curable coating composition according to any one of preceding claims, wherein the ten-functionality aliphatic polyurethane acrylate is polymerized by isophorone diisocyanate monomers.

6. A method of forming a coating on a substrate, comprising applying an UV curable coating composition to at least a portion of the substrate, wherein the UV curable coating composition comprises an UV curable polyurethane acrylate having functionality greater or equal to 6 and 0.1-3 wt% of a fluorine-containing acrylic soil-repellent, based on the weight of the coating composition, wherein the UV curable polyurethane acrylate comprises 5-50 wt% of six-functionality aliphatic polyurethane acrylate and 5-50 wt% of ten-functionality aliphatic polyurethane acrylate, based on the weight of the coating composition.

7. A coated substrate, comprising a substrate and an UV curable coating composition deposited on at least a portion of the substrate, wherein the UV curable coating composition comprises an UV curable polyurethane acrylate having functionality greater or equal to 6 and 0.1-3 wt% of a fluorine-containing acrylic soil-repellent, based on the weight of the coating composition, wherein the UV curable polyurethane acrylate comprises 5-50 wt% of six-functionality aliphatic polyurethane acrylate and 5-50 wt% of ten-functionality aliphatic polyurethane acrylate, based on the weight of the coating composition.

8. The coated substrate according to claim 7, wherein the substrate comprises a substrate formed from the group consisting of polymethyl methacrylate, polycarbonate, and polyethylene terephthalate.

9. Use of the coated substrate according to claim 7 or 8 for a display on board, a PET protective film and a display for computers and mobile phones.

## Patentansprüche

1. Eine UV-härtbare Beschichtungszusammensetzung enthaltend ein UV-härtbares Polyurethanacrylat, das eine Funktionalität von größer oder gleich 6 aufweist, und 0,1 - 3 Gew.-% eines fluorhaltigen, acrylischen Schmutzabweisers, basierend auf dem Gewicht der Beschichtungszusammensetzung, wobei das UV-härtbare Polyurethanacrylat 5 - 50 Gew.-% eines sechsfach funktionellen aliphatischen Polyurethanacrylats und 5 - 50 Gew.-% eines zehnfach funktionellen aliphatischen Polyurethanacrylats aufweist, basierend auf dem Gewicht der Beschichtungszusammensetzung.

2. Die UV-härtbare Beschichtungszusammensetzung gemäß Anspruch 1, wobei das UV-härtbare Polyurethanacrylat ein zahlenmittleres Molekulargewicht von 800 bis 4000 aufweist, wobei das zahlenmittlere Molekulargewicht gemäß dem in der Beschreibung erwähnten Verfahren bestimmt wird.

3. Die UV-härtbare Beschichtungszusammensetzung gemäß Anspruch 1 oder 2, wobei das UV-härtbare Polyurethanacrylat aus der Gruppe bestehend aus sechsfach funktionellem aliphatischem Polyurethanacrylat, zehnfach funktionellem aliphatischem Polyurethanacrylat und einer Mischung derselben ausgewählt ist.

4. Die UV-härtbare Beschichtungszusammensetzung gemäß einem der vorstehenden Ansprüche, wobei das sechsfach funktionelle aliphatische Polyurethanacrylat ein Reaktionsprodukt von Isophorondiisocyanat und Pentaerythritoltriacrylat ist.

5. Die UV-härtbare Beschichtungszusammensetzung gemäß einem der vorstehenden Ansprüche, wobei das zehnfach funktionelle aliphatische Polyurethanacrylat durch Isophorondiisocyanatmonomere polymerisiert ist.

6. Ein Verfahren zur Bildung einer Beschichtung auf einem Substrat umfassend Auftragen einer UV-härtbaren Beschichtungszusammensetzung auf zumindest einem Teil des Substrats, wobei die UV-härtbare Beschichtungszusammensetzung ein UV-härtbares Polyurethanacrylat, das eine Funktionalität von größer oder gleich 6 aufweist, und 0,1 - 3 Gew.-% eines fluorhaltigen, acrylischen Schmutzabweisers, basierend auf dem Gewicht der Beschichtungszusammensetzung, wobei das UV-härtbare Polyurethanacrylat 5 - 50 Gew.-% eines sechsfach funktionellen aliphatischen Polyurethanacrylats und 5 - 50 Gew.-% eines zehnfach funktionellen aliphatischen Polyurethanacrylats aufweist, basierend auf dem Gewicht der Beschichtungszusammensetzung.

7. Ein beschichtetes Substrat enthaltend ein Substrat und eine UV-härtbare Beschichtungszusammensetzung, die auf zumindest einem Teil des Substrats abgeschieden ist, wobei die UV-härtbare Beschichtungszusammensetzung ein UV-härtbares Polyurethanacrylat, das eine Funktionalität von größer oder gleich 6 aufweist, und 0,1 - 3 Gew.-% eines fluorhaltigen, acrylischen Schmutzabweisers, basierend auf dem Gewicht der Beschichtungszusammensetzung, wobei das UV-härtbare Polyurethanacrylat 5 - 50 Gew.-% eines sechsfach funktionellen aliphatischen Polyurethanacrylats und 5 - 50 Gew.-% eines zehnfach funktionellen aliphatischen Polyurethanacrylats aufweist, basierend auf dem Gewicht der Beschichtungszusammensetzung.

8. Das beschichtete Substrat gemäß Anspruch 7, wobei das Substrat ein Substrat hergestellt aus der Gruppe bestehend aus Polymethylmethacrylat, Polycarbonat und Polyethylenterephthalat umfasst.

9. Verwendung des beschichteten Substrats gemäß Anspruch 7 oder 8 für ein Display an Bord, eine PET-Schutzfolie und ein Display für Computer und Mobiltelefone.

## Revendications

1. Composition de revêtement durcissable sous UV, comprenant un acrylate de polyuréthane durcissable sous UV, présentant un degré de fonctionnalité supérieur ou égal à 6, et 0,1 à 3 % en poids d'un agent anti-salissure acrylique fluoré, par rapport au poids de la composition de revêtement, et dans laquelle l'acrylate de polyuréthane durcissable sous UV comprend de 5 à 50 % en poids d'un acrylate de polyuréthane aliphatique hexa-fonctionnel et de 5 à 50 % en poids d'un acrylate de polyuréthane aliphatique déca-fonctionnel, par rapport au poids de la composition de revêtement.

2. Composition de revêtement durcissable sous UV, conforme à la revendication 1, dans laquelle l'acrylate de polyuréthane durcissable sous UV présente une masse molaire moyenne en nombre valant de 800 à 4000, étant entendu que cette masse molaire moyenne en nombre est déterminée selon le procédé mentionné dans la description.

3. Composition de revêtement durcissable sous UV, conforme à la revendication 1 ou 2, dans laquelle l'acrylate de polyuréthane durcissable sous UV est choisi dans l'ensemble constitué par un acrylate de polyuréthane aliphatique hexa-fonctionnel, un acrylate de polyuréthane aliphatique déca-fonctionnel, et un mélange de ceux-ci.

4. Composition de revêtement durcissable sous UV, conforme à l'une des revendications précédentes, dans laquelle l'acrylate de polyuréthane aliphatique hexa-fonctionnel est un produit de réaction de diisocyanate d'isophorone et de triacrylate de pentaérythritol.

5. Composition de revêtement durcissable sous UV, conforme à l'une des revendications précédentes, dans laquelle l'acrylate de polyuréthane aliphatique déca-fonctionnel est polymérisé avec du monomère diisocyanate d'isophorone.

6. Procédé de formation d'un revêtement sur un substrat, comportant le fait d'appliquer une composition de revêtement, durcissable sous UV, sur au moins une partie du substrat, et dans lequel la composition de revêtement durcissable sous UV comprend un acrylate de polyuréthane durcissable sous UV, présentant un degré de fonctionnalité supérieur ou égal à 6, et 0,1 à 3 % en poids d'un agent anti-salissure acrylique fluoré, par rapport au poids de la composition de revêtement, et dans lequel l'acrylate de polyuréthane durcissable sous UV comprend de 5 à 50 % en poids d'un acrylate de polyuréthane aliphatique hexa-fonctionnel et de 5 à 50 % en poids d'un acrylate de polyuréthane aliphatique déca-fonctionnel, par rapport au poids de la composition de revêtement.

7. Substrat revêtu, comprenant un substrat et une composition de revêtement durcissable sous UV, déposée sur au moins une partie du substrat, dans lequel la composition de revêtement durcissable sous UV comprend un acrylate de polyuréthane durcissable sous UV, présentant un degré de fonctionnalité supérieur ou égal à 6, et 0,1 à 3 % en poids d'un agent anti-salissure acrylique fluoré, par rapport au poids de la composition de revêtement, et dans lequel l'acrylate de polyuréthane durcissable sous UV comprend de 5 à 50 % en poids d'un acrylate de polyuréthane aliphatique hexa-fonctionnel et de 5 à 50 % en poids d'un acrylate de polyuréthane aliphatique déca-fonctionnel, par rapport au poids de la composition de revêtement.

8. Substrat revêtu conforme à la revendication 7, lequel substrat comprend un substrat formé à partir d'un élément de l'ensemble constitué par les poly(méthacrylate de méthyle), polycarbonate et poly(éthylène téréphtalate).

9. Utilisation d'un substrat revêtu conforme à la revendication 7 ou 8, pour un panneau d'affichage, un film protecteur en PET, ou un écran d'ordinateur ou de téléphone mobile.
